(19) Europäisches Patentamt / European Patent Office / Office européen des brevets

(11) **EP 4 526 165 B1**

(12) **EUROPEAN PATENT SPECIFICATION**

(45) Date of publication and mention
of the grant of the patent:
**08.04.2026 Bulletin 2026/15**

(21) Application number: **23731749.0**

(22) Date of filing: **19.05.2023**

(51) International Patent Classification (IPC):
**B60T 13/66** *(2006.01)*     **B60T 17/22** *(2006.01)*

(52) Cooperative Patent Classification (CPC):
**B60T 13/665; B60T 17/22; B60T 17/228;**
B60T 2270/40

(86) International application number:
**PCT/IB2023/055172**

(87) International publication number:
**WO 2023/223277 (23.11.2023 Gazette 2023/47)**

(54) **SYSTEM FOR VERIFYNG A BRAKING RELEASE CONDITION OF A PLURALITY OF BRAKING MEANS OF AT LEAST ONE VEHICLE, AND VEHICLE**

SYSTEM ZUR ÜBERPRÜFUNG EINES BREMSLÖSUNGSZUSTANDS MEHRERER BREMSMITTEL MINDESTENS EINES FAHRZEUGS UND FAHRZEUG

SYSTÈME DE VERIFICATION D'UNE CONDITION DE DESSERRAGE DE FREINAGE D'UNE PLURALITE DE MOYENS DE FREINAGE D'AU MOINS UN VÉHICULE, ET VÉHICULE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **20.05.2022 IT 202200010505**

(43) Date of publication of application:
**26.03.2025 Bulletin 2025/13**

(73) Proprietor: **Faiveley Transport Italia S.p.A.**
**10045 Piossasco (TO) (IT)**

(72) Inventor: **FREA, Matteo**
**10060 Cantalupa (Torino) (IT)**

(74) Representative: **Cristinelli, Luca et al**
**Jacobacci & Partners S.p.A.**
**Corso Emilia, 8**
**10152 Torino (IT)**

(56) References cited:
IT-A1- 202000 007 003     US-A1- 2002 153 766
US-A1- 2007 228 813     US-A1- 2019 111 904
US-A1- 2021 188 223     US-B1- 6 401 015

**Description**

<u>Technical field</u>

The present invention is generally in the field of braking systems; in particular, the invention relates to a system for verifying a braking release condition by a plurality of braking means of at least one vehicle, and a vehicle.

<u>Prior art</u>

The prior art will be described below with particular reference to the field of railway vehicles. Nevertheless, what is described in the following may also apply, where possible, to vehicles in other fields.

Railway vehicles, whether intended for the transport of passengers or goods, usually have, for example, a pneumatic or electro-pneumatic or electro-mechanical braking system including one or more means of braking. One example of such braking system according to the state of the art is disclosed in US 6 401 015 B1.

For multiple reasons of safety and/or to support the monitoring of rolling stock, it is necessary to provide the vehicle with a system that allows the state of release of the brake to be verified.

For example, for safety reasons, it is necessary to verify that, if the driver has commanded the release of the braking, the braking has actually been released by all the braking means of the vehicle. Failure to release the braking by a braking means could lead to dragging of the wheel(s) associated with this braking means, with consequent damage to the rolling stock and infrastructure and risk of derailment for the vehicle.

Known braking systems include a plurality of braking control modules. Each braking control module is arranged to be associated with at least one of said braking means. In particular, each braking control module is arranged to regulate a braking force generated by the at least one braking means associated therewith.

Therefore, when the driver requests the braking release, each braking control module will be able to control the at least one braking means associated therewith so that no braking force is generated by the at least one braking means.

To verify that braking has actually been released, the known systems to verify a braking release condition by a plurality of braking means of at least one vehicle are implemented in the following manner.

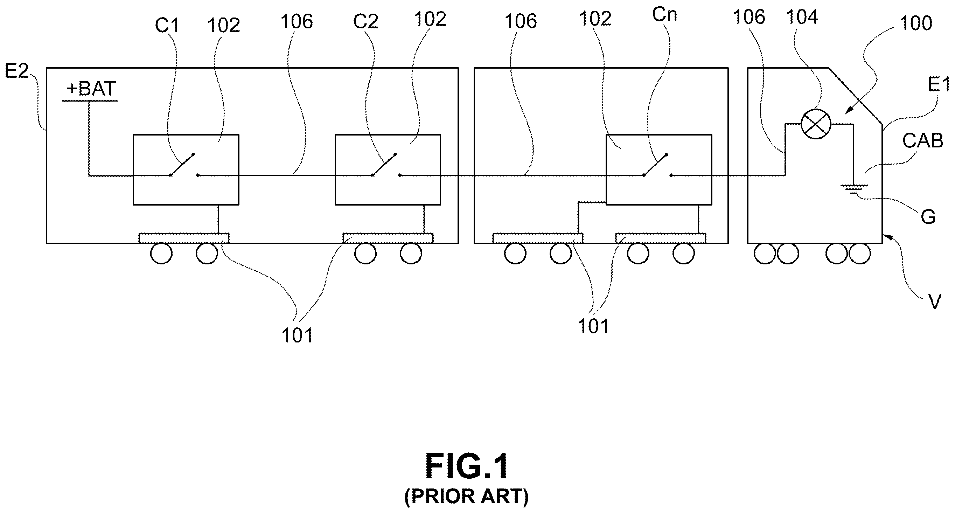

An example of these known systems 100 for verifying a braking release condition by a plurality of braking means 101 of at least one vehicle is shown by way of example in Fig. 1.

The braking control modules 102 are connected in series with each other and in series with a light source 104 arranged inside the driver's cabin CAB of the vehicle V.

The braking control modules 102 and the light source 104 are arranged in series along a power line 106 connected to a power source terminal (e.g., a positive terminal of a vehicle battery +BAT) on one side and to the ground G on the other side.

Each braking control module 102 may include or be associated with its own electrical circuit interruption means C1, C2, ..., Cn, e.g., a switch, arranged to interrupt the power line 106 when the relevant braking control module detects that the braking force has not been fully released by the at least one braking means associated therewith and controlled thereby. In other words, each individual interruption means C1, ..., Cn is closed if the corresponding braking means 101 is released. Therefore, the power line 106 is closed (electrical continuity) only if all the braking means are not applying the brake.

In this way, the light source 104 will only be able to receive the power supply and turn on if all electrical circuit interruption means C1, C2, ..., Cn are brought into and maintained in the closed condition by the respective braking control modules 102. The driver will therefore be able to verify that all the braking means 101 are in a released braking condition by observing the on/off status of the light source 104:

- light source 104 on = all the braking means 101 are in the released braking condition;
- light source 104 off = at least one braking means 101 is not in the released braking condition.

Disadvantageously, in a known system 100 for verifying a braking release condition by a plurality of braking means of at least one vehicle such as the one just described, even when an electrical circuit interruption means C1, C2, ..., Cn is in its closed condition, it does not correspond to an ideal short-circuit. In fact, when an electrical circuit interruption means is in its closed condition it still has some parasitic resistance Rn.

Taking this into account, when all the electric circuit interruption means C1, C2, ..., Cn are in the closed condition, the current $I_{lamp}$ that will pass into the light source will be equal to the ratio of the voltage supplied by the power source $V_{batt}$ and the sum of a light source resistance $R_{lamp}$ and all the parasitic resistances R1, R2, ... Rn of the electric circuit interruption means:

$$I_{lamp} = \frac{V_{batt}}{(R1 + R2 + \cdots + Rn + R_{lamp})}$$

Therefore, as the number of braking control modules changes, both the voltage drop along the power line 106 and the current $I_{lamp}$ flowing in the light source 104 will vary.

Changes in the current $I_{lamp}$ may lead to the following issues:

- if the current $I_{lamp}$ is too high, the light source may be damaged;
- if the current $I_{lamp}$ is too low, the light source may not turn on.

In a further aspect, in a known system for verifying a braking release condition by a plurality of braking means of at least one vehicle such as the one described above, appropriate electrical wiring must be dedicated to this functionality. This electrical wiring should therefore be installed in the vehicle V in addition to further electrical or communication lines already provided in the vehicle V and should run the entire distance between the light source 104 and the braking control module 102 which is installed in the vehicle furthest from the light source 104, in order to obtain the dedicated electrical line. Usually, the light source 104 and the braking control module furthest from the light source may be installed near the two opposite ends E1, E2 of the vehicle.

Disadvantageously, the use of such electrical wiring has the following drawbacks:

- increase in vehicle production costs;
- inconvenience of installation, due to the need to run electrical wiring along the entire vehicle (including through the couplings between the various cars if the vehicle includes a plurality of cars).

Summary of the invention

One object of the present invention is therefore to provide a system for verifying a braking release condition by a plurality of braking means of at least one vehicle, and a vehicle, which allow the installation of additional dedicated electrical wiring along the vehicle to be avoided and of which the operation may not be compromised by/dependent on the number of braking control modules in the vehicle.

The aforesaid and other objects and advantages are achieved according to a first aspect of the invention by a system for verifying a braking release condition by a plurality of braking means of at least one vehicle having the features defined in claim 1, according to a second aspect of the invention by a system for verifying a braking release condition by a plurality of braking means of at least one vehicle having the features defined in claim 2, and according to a third aspect of the invention by a vehicle having the features defined in claim 15. Preferred embodiments of the invention are defined in the dependent claims, the content of which is to be understood as an integral part of the present description.

Brief description of the drawings

The functional and structural features of some preferred embodiments of a system for verifying a braking release condition by a plurality of braking means of at least one vehicle, and a vehicle, according to the invention will now be described. Reference is made to the accompanying drawings, wherein:

- Fig. 1 illustrates a system for verifying a braking release condition by a plurality of braking means of at least one vehicle obtained according to the prior art;
- Fig. 2 illustrates an embodiment of a system for verifying a braking release condition by a plurality of braking means of at least one vehicle according to the invention;
- Fig. 3 illustrates a further embodiment of a system for verifying a braking release condition by a plurality of braking means of at least one vehicle according to the invention.

Detailed description

Before explaining in detail a plurality of embodiments of the invention, it should be clarified that the invention is not limited in its application to the design details and configuration of the components presented in the following description or illustrated in the drawings. The invention may assume other embodiments and be implemented or constructed in practice in different ways. It should also be understood that the phraseology and terminology have a descriptive purpose and should not be construed as limiting. The use of "include" and "comprise" and the variations thereof are intended to cover the elements set out below and the equivalents thereof, as well as additional elements and the equivalents thereof.

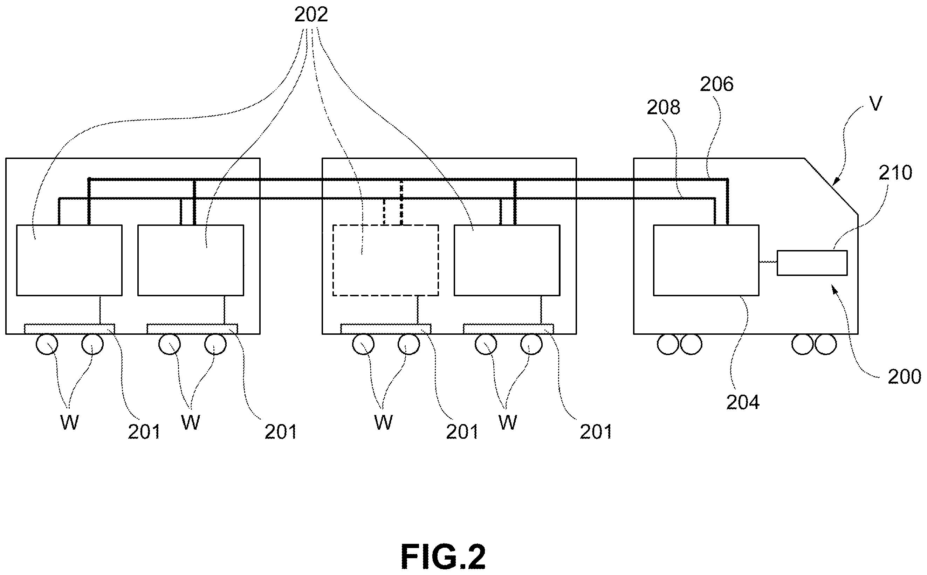

Referring initially to Fig. 2, said figure illustrates an embodiment of a system 200 for verifying a braking release condition by a plurality of braking means of at least one vehicle.

The system 200 for verifying a braking release condition comprises:

- a plurality of braking control modules 202;
- a control means 204;
- a first communication means arranged to enable the transmission of messages from each braking control module of the plurality of braking control modules 202 to the control means;
- a second communication means, distinct from the first communication means, arranged to enable the transmission of messages from each braking control module of the plurality of braking control modules 202 to the control means.

Each braking control module 202 is arranged to:

- be associated with at least one of the braking means 201;
- determine whether the at least one braking means 201 associated therewith is in a released braking condition;
- when the at least one braking means 201 associated therewith is in a released braking condition, transmit to the control means 204, via said first communication means and said second communication means, a message of successful braking release.

For example, the successful braking release message may be a message conveying at least one piece of data or information indicating that the braking release has occurred.

In one example, each braking control module 202 may be arranged to be associated with at least one of the braking means 201, or at least one respective means of said braking means 201, so that the braking means of which the braking release condition is to be verified, or all the braking means, are associated with at least one of said braking control modules 202. For example, if there are two braking control modules 202 and four braking means 201 of which the braking release condition is to be verified, a first braking control module 202 may be arranged to be associated with two of the braking means 201, and a second braking control module 202 may be arranged to be associated with the other two braking means 201. In a further example, if there are four braking control modules 202 and four braking means 201 of which the braking release condition is to be verified, a first braking control module 202 may be arranged to be associated with a first braking means 201, a second braking control module 202 may be arranged to be associated with a second braking means 201, a third braking control module 202 may be arranged to be associated with a third braking means 201, and a fourth braking control module 202 may be arranged to be associated with a fourth braking means 201.

The control means 204 is arranged to:

- when the control means 204 determines that it is receiving, from all the braking control modules 202, the respective messages of successful braking release, through at least one of the first communication means 206 and the second communication means 208, actuate at least one signaling means 210.

Preferably, the at least one signaling means 210 may be arranged to be installed in the vehicle, such as in the driver's cab of the vehicle.

An additional embodiment of a system 200 for verifying a braking release condition by a plurality of braking means of at least one vehicle is described hereinafter.

Also for this embodiment reference may still be made to Fig. 2.

The system 200 for verifying a braking release condition again comprises:

- a plurality of braking control modules 202;
- a control means 204;
- a first communication means arranged to enable the transmission of messages from each braking control module of the plurality of braking control modules 202 to the control means 204; and
- a second communication means, distinct from the first communication means, arranged to enable the transmission of messages from each braking control module of the plurality of braking control modules 202 to the control means 204.

In this embodiment, however, each braking control module is arranged to:

- be associated with at least one of the braking means 201;
- measure a braking force value applied by the at least one braking means 201 associated therewith;

-    transmit to the control means 204, via the first communication means and the second communication means, an applied braking force message indicative of the measured applied braking force value.

For example, the applied braking force message may be a message conveying at least one piece of data or information indicating the measured applied braking force value.

In this case, the control means 204 is arranged to:

-    when the control means 204 determines that all the braking control modules, through at least one of the first communication means 206 and the second communication means 208, are transmitting the respective applied braking force messages and all of the respective applied braking force messages are indicating an applied braking force value corresponding to a released braking condition, actuate at least one signaling means 210.

Preferably, the at least one signaling means 210 may again be arranged to be installed in the vehicle, such as in the driver's cab of the vehicle.

Also for this embodiment, in one example, each braking control module 202 may be arranged to be associated with at least one of the braking means 201, or at least one respective means of said braking means 201, so that the braking means of which the braking release condition is to be verified, or all the braking means, are associated with at least one of said braking control modules 202.

For example, if there are two braking control modules 202 and four braking means 201 of which the braking release condition is to be verified, a first braking control module 202 may be arranged to be associated with two of the braking means 201, and a second braking control module 202 may be arranged to be associated with the other two braking means 201. In a further example, if there are four braking control modules 202 and four braking means 201 of which the braking release condition is to be verified, a first braking control module 202 may be arranged to be associated with a first braking means 201, a second braking control module 202 may be arranged to be associated with a second braking means 201, a third braking control module 202 may be arranged to be associated with a third braking means 201, and a fourth braking control module 202 may be arranged to be associated with a fourth braking means 201.

What is described below may apply to all the embodiments described.

Preferably, the vehicle may be or comprise at least one railway vehicle.

For example, the braking means 201 may be associated with an electro-mechanical actuator or a pneumatic actuator or an electro-pneumatic actuator, or an actuator of any other technology that may be used for a vehicle.

Each braking means 201 may, for example, be arranged to apply a braking force to at least one wheel W of the vehicle or to at least one braking member associated with at least one wheel of the vehicle or to an axle to which at least one wheel of the vehicle is mounted. For example, the braking member, when associated with at least one wheel of the vehicle, may be a disc brake mounted to the wheel. For example, the at least one braking member, when associated with the axle to which the at least one wheel is mounted, may be a disc brake mounted to the axle.

For example, each braking means 201 may comprise braking force application means, such as, for example, a braking shoe, disc brake calipers, etc.

Preferably, "released braking condition" may mean either the case in which a braking means applies no braking force or the case in which a braking means applies a braking force less than a predetermined minimum braking force. For example, the minimum braking force may be a minimum braking value low enough to be negligible and not impact the vehicle performance.

For example, the third control means 204 may be or comprise at least one of a controller, a processor, a microprocessor, a microcontroller, a PLC, and the like. For example, the control means 204 may be included in an appropriate control unit or control module.

For example, a braking control module may be or include at least one control means/control unit.

Advantageously, according to the present invention, the fact that there are at least two communication means 206, 208, i.e., the communication means through which communication may take place is redundant, ensures that any single failure or disconnection of one of the communication means 206, 208 is not able to compromise the proper operation of the entire system for verifying a braking release condition by a plurality of braking means 201 of at least one vehicle V.

The first communication means 206 and the second communication means 208 may each comprise a communication network or a communication bus line.

The first communication means 206 and the second communication means 208 may further comprise communication control means arranged to manage the communication in the first communication means 206 and the second communication means 208. **In** addition or alternatively, the braking control modules may also each include their own communication control means suitable for managing communication in the first communication means 206 and in the second communication means 208 by the respective braking control module.

Preferably, the first communication means 206 and the second communication means 208 may be of a wired or wireless type.

Preferably, the first communication means 206 and the second communication means 208 may be obtained via two different technologies. For example, the first communication means 206 may be a wired communication means and the second communication means 208 may be a wireless communication means.

Preferably, the first communication means 206 and the second communication means 208 may be communication means arranged to convey additional communication messages/signals in addition to the various messages of successful braking release. **In** other words, the first communication means 206 and the second communication means 208 need not be dedicated only to the function of verifying a braking release condition by the plurality of braking means performed by the system for verifying a braking release condition by a plurality of braking means of at least one vehicle.

Preferably, each braking control module may be arranged to determine whether the at least one braking means 201 associated therewith is in a released braking condition or to measure the applied braking force value (depending on the embodiment) after a first predetermined time interval has elapsed since receiving a braking release command.

This first predetermined time interval may be used to allow the determination of the released braking condition or the measurement of the applied braking force value (depending on the embodiment) to take place after a minimum transient period has elapsed that is suitable for allowing the braking means to transition from the applied braking condition to the released braking condition.

For example, the braking release command may be generated by a centralized vehicle control means that may be capable of controlling, via appropriate control messages/signals, the braking control modules.

Preferably, each braking control module may be arranged to determine whether the at least one braking means 201 associated therewith is in a released braking condition or to measure the value of applied braking force (depending on the embodiment) at instants of time defined in accordance with a predetermined period.

In other words, the determination of the released braking condition or the measurement of the applied braking force value (depending on the embodiment) may be repeated over time at predetermined instants of time defined in accordance with a predetermined period, such as every 100 us.

Preferably, each braking control module 202 may also be a module arranged to regulate the braking force applied by the at least one braking means 201 associated therewith. For example, each braking control module 202 may be a module arranged to adjust the applied braking force according to at least one service braking request message/signal and/or one emergency braking request message/signal and/or one indicative weight message/signal of the vehicle to be decelerated and/or one current vehicle speed message/signal, etc.

Preferably, each braking control module 202 may also be arranged to transmit a relevant life message ("life signal") to the control means 204 via said first communication means and said second communication means.

A life message may be generically understood as a message to monitor whether a particular component/electronics/electronic system is "alive" (i.e., the component/electronics/electronic system is not damaged or is not in a locked operational condition).

In such a case, the control means 204 may be arranged to determine that a braking control module 202 of said plurality of braking control modules is not operating properly or is no longer connected to the first communication means 206 and the second communication means 208 when:

- the control means 204 does not receive, through said first communication means 206 and said second communication means 208, the life message from said braking control module 202 for at least a predetermined time interval; or
- the control means 204 receives from this braking control module 202, through said first communication means 206 and said second communication means 208, a life message that is different from an expected life message.

For example, the life message may be a message indicative of an incremental counter of which the increase velocity is known.

For example, the life message may be a message conveying at least one piece of data or information indicating the current value of the incremental counter.

Preferably, when the control means 204 determines that a braking control module 202 of said plurality of braking control modules is not operating properly or is no longer connected to the first communication means 206 and the second communication means 208, the control means 204 may be arranged to determine that the braking means 201 associated with this braking control module 202 are in a predetermined braking condition.

Preferably, the predetermined condition may be a released braking condition.

In one alternative, the predetermined condition may be an applied braking condition.

Preferably, the predetermined condition may be set differently for each braking control module.

For example, the predetermined condition may be established directly by the vehicle or system manufacturer to verify a braking release condition covered by the present invention.

In each case, the predetermined condition associated with each braking module will be known to the control means 204 which may then independently determine the braking state (applied or released) of the braking means associated with a braking control module from which it does not receive the expected life message.

For example, the control means 204 may include or be associated with a memory means in which the predetermined conditions of the various braking means are stored. The control means will be able to read (and write if necessary) data from that memory means.

Preferably, said control means 204 may be arranged to deactivate said at least one signaling means 210 or prevent actuation of the at least one signaling means 210 when said control means determines that the at least one braking means 201 associated with a braking control module is in a predetermined braking condition and said predetermined braking condition is the applied braking condition.

Preferably, the first communication means 206 and the second communication means 208 may be arranged to update the messages transmitted from the braking control modules to the control means at communication instants defined in accordance with a predetermined communication period.

The predetermined communication period may be the same for the first communication means and the second communication means, or the first communication means and the second communication means may use different communication periods.

In one example, the messages transmitted by the first communication means and the second communication means may be essentially synchronous with each other, and the synchrony may be achieved by means of a common clock.

Preferably, the messages transmitted at one communication instant are continuously transmitted through the first communication means and the second communication means until a subsequent communication instant.

Preferably, the first communication means and/or the second communication means may be based on "black channel" protocol.

A communication means based on "black channel" protocol enables the transmission of fail-safe and standard data through the same communication network, which may be, for example, a communication channel, a communication network or a communication bus line.

Preferably, the control means 204 may be implemented according to a safety integrity level, SIL, greater than a predetermined minimum safety integrity level.

When the vehicle is a vehicle in the railway sector, with regard to the definition of the safety integrity level SIL, reference may be made to European standards EN50129:rev.2018, EN 50159:rev.2010, EN 50126-1:rev.2017, EN 50126-2:rev.2017, EN 50128:rev.2011, according to the latest update available at the filing date of the present invention, where:

- EN50126 ["Railway applications. The specification and demonstration of reliability, availability, maintainability and safety (RAMS)];
- EN50128 ["Railway applications. Communications, signalling and processing systems. Software for railway control and protection systems"];
- EN50129 ["Railway applications. Communication, signaling and processing systems. Safety related electronic systems for signalling"].
- EN50159 ["Railway applications. Communication, signaling and processing systems. Safety-related communication in transmission systems"].

In particular, standard EN50126 defines the methodologies for assigning the SIL0/1/2/3/4 safety levels (with safety integrity level SIL4 indicating the maximum safety integrity level) to the subsystems making up the system in question, based on the results of the safety analysis, and standards EN50128 and EN50129 define the design criteria to be applied to the software and hardware components, respectively, based on the SIL levels assigned based on said safety analysis results.

A control means, a device, a unit or module, etc., may be considered implemented according to a high safety integrity level when made at least according to a SIL >= 3 safety integrity level.

Therefore, the control means 204 of the system 200 for verifying a braking release condition by a plurality of braking means of at least one vehicle covered by the present invention may be obtained according to a safety integrity level SIL greater than 2.

Preferably, the vehicle V may include at least one railway vehicle.

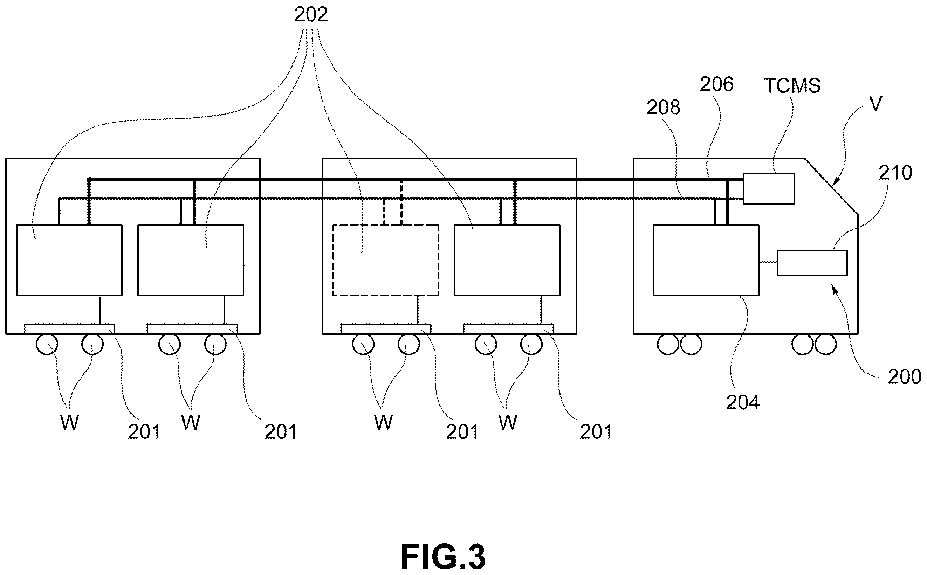

In such case, as observable in Fig. 3, the railway vehicle may include a train control management system, TCMS.

In the railway industry, the TCMS is a centralized supervisory system for the various subsystems of a railway vehicle or train. For example, such subsystems may be door systems, lighting systems, braking means, communication systems, batteries, etc.

The TCMS may also be connected to the first communication means 206 and the second communication means 208 for transmitting its own messages.

The control means 204 may be distinct from said train control management system, TCMS, or the control means 204 may be directly included in the train control management system, TCMS. In the second case, the functionality of verifying a braking release condition may be integrated directly into the TCMS.

For example, the control means 204 may be shared between the train control management system, TCMS, and the system for verifying a braking release condition. In such a case, the control means 204 will be able to perform both the function of verifying a braking release condition and the function of vehicle control management.

Preferably, the at least one signaling means 210 may include at least one means of visual signaling.

For example, the visual signaling means may include at least one among an indicator light, an LED, a light bulb, an icon in a display, and the like.

For example, actuation of the signaling means may mean either turning on the signaling means when said signaling means is normally off or turning off the signaling means when said signaling means is normally on.

In a further aspect, the present invention relates to a vehicle including:

- a system 200 for verifying a braking release condition by a plurality of braking means of at least one vehicle according to any of the previously described embodiments.

The vehicle clearly may comprise a plurality of braking means.

Preferably, the vehicle may be a railway vehicle or a railway convoy (or train) comprising a plurality of railway vehicles.

In a further aspect, the following are examples of a method for verifying a braking release condition by a plurality of braking means of at least one vehicle V, particularly at least one railway vehicle.

In a first example, the method comprises the steps of:

- setting up a plurality of braking control modules 202 and associating each of them with at least one of the braking means 201 of the vehicle;
- via each braking control module, determining whether the at least one braking means 201 associated with that braking control module is in a released braking condition;
- when each braking control module determines that the at least one braking means 201 associated therewith is in a released braking condition, transmitting a message of successful braking release to a braking control means 204 via a first communication means arranged to allow the transmission of messages from each braking control module to said braking control means 204 and a second communication means, distinct from the first communication means, arranged to allow the transmission of messages from each braking control module to said control means;
- when the control means 204 determines that it is receiving from all the braking control modules 202 the respective messages of successful braking release through at least one of the first communication means 206 and the second communication means 208, actuating at least one signaling means 210.

In a second example, the method comprises the steps of:

- setting up a plurality of braking control modules 202 and associating each of them with at least one of the braking means 201;
- via each braking control module, measuring a braking force value applied by the at least one braking means 201 associated with said braking control module, and transmitting to a control means 204 an applied braking force message indicative of the measured applied braking force value, via a first communication means arranged to allow the transmission of messages from each braking control module 202 to said braking control means 204 and a second communication means, distinct from the first communication means, arranged to enable the transmission of messages from each braking control module 202 to said braking control means;
- when the control means 204 determines that all the braking control modules, through at least one of the first communication means 206 and the second communication means 208, are transmitting the respective applied braking force messages and all of said respective applied braking force messages are indicating an applied braking force value corresponding to a released braking condition, actuating at least one signaling means 210.

Clearly, the embodiments described above with reference to a system for verifying a braking release condition by a plurality of braking means of at least one vehicle V and not repeated here may apply similarly to the methods described above.

Preferably, the present invention may be particularly applicable to the field of railway vehicles/trains that travel on railway tracks. For example, a vehicle referred to herein may be a locomotive or a wagon, and a route/section may include rails on which the wheels of the locomotive roll. However, the embodiments described herein are not intended to be limited to vehicles on tracks. For example, the vehicle may be a car, a truck (for example a highway semi-trailer truck, a mining truck, a truck for transporting timber or the like) or the like, and the route may be a road or a trail.

For example, in the present invention, multiple vehicles may be connected or associated with each other to form a convoy.

In such a case, the braking control modules, the braking means, the control means, the power line, the first communication means, the second communication means, the light source and the other various components of the system for verifying a braking release condition by a plurality of braking means of at least one vehicle may be installed along the various vehicles forming the convoy.

Thus, the advantage achieved is to have provided a system for verifying a braking release condition by a plurality of braking means of at least one vehicle that avoids the installation of additional dedicated electrical wiring along the vehicle and the operation of which is not compromised/dependent on the number of braking control modules in the vehicle.

Various aspects and embodiments of a system for verifying a braking release condition by a plurality of braking means of at least one vehicle according to the invention have been described. It is understood that each embodiment may be combined with any other embodiment. Moreover, the invention is not limited to the embodiments described, but may be varied within the scope defined by the appended claims.

## Claims

1. A system (200) for verifying a braking release condition of a plurality of braking means (201) of at least one vehicle (V), particularly at least one railway vehicle, comprising:

   - a plurality of braking control modules (202);
   - a control means (204);
   - a first communication means arranged to enable the transmission of messages from each braking control module of said plurality of braking control modules (202) to said control means;

   **characterised by**

   - a second communication means, distinct from the first communication means, arranged to enable the transmission of messages from each braking control module of said plurality of braking control modules (202) to said control means;

   wherein each braking control module of said plurality of braking control modules (202) is arranged to:

   - be associated with at least one of said braking means (201);
   - determine whether the at least one braking means (201) associated therewith is in a released braking condition;
   - when the at least one braking means (201) associated therewith is in a released braking condition, transmit to said control means (204), via said first communication means and said second communication means, a message of successful braking release;

   wherein said control means (204) is arranged to:

   - when the control means (204) determines that it is receiving, from all of the braking control modules (202), the respective messages of successful braking release through at least one of the first communication means (206) and the second communication means (208), actuate at least one signaling means (210).

2. A system (200) for verifying a braking release condition of a plurality of braking means (201) of at least one vehicle (V), particularly at least one railway vehicle, comprising:

   - a plurality of braking control modules (202);
   - a control means (204);
   - a first communication means arranged to enable the transmission of messages from each braking control module of said plurality of braking control modules (202) to said control means;

   **characterised by**

   - a second communication means, distinct from the first communication means, arranged to enable the transmission of messages from each braking control module of said plurality of braking control modules (202) to said control means;

   wherein each braking control module of said plurality of braking control modules (202) is arranged to:

- be associated with at least one of said braking means (201);
- measure a braking force value applied by the at least one braking means (201) associated therewith;
- transmit to said control means (204), via said first communication means and said second communication means, an applied braking force message indicative of the measured applied braking force value;

wherein said control means (204) is arranged to:

- when the control means (204) determines that all the braking control modules, through at least one of the first communication means (206) and the second communication means (208), are transmitting the respective applied braking force messages and all said respective applied braking force messages are indicating an applied braking force value corresponding to a released braking condition, actuate at least one signaling means (210).

3. The system for verifying a braking release condition according to claim 1 or 2, wherein each braking control module (202) is further arranged to:

- via said first communication means and said second communication means, transmit a respective life message to the control means (204);

wherein said control means (204) is arranged to determine that a braking control module of said plurality of braking control modules (202) is not operating properly or is no longer connected to the first communication means (206) and the second communication means (208) when:

- said control means (204) does not receive, through said first communication means (206) and said second communication means (208), the life message from said braking control module (202) for at least a predetermined time interval; or
- said control means (204) receives from said braking control module (202), through said first means of communication (206) and said second means of communication (208), a life message that is different from an expected life message.

4. The system for verifying a braking release condition according to any one of the preceding claims, wherein when said control means (204) determines that a braking control module of said plurality of braking control modules (202) is not operating properly or is no longer connected to the first communication means (206) and the second communication means (208), said control means (204) is arranged to:

- determine that the braking means (201) associated with that braking control module are in a predetermined braking condition.

5. The system for verifying a braking release condition according to claim 4, wherein said predetermined condition is a released braking condition.

6. The system for verifying a braking release condition according to claim 4, wherein said predetermined condition is an applied braking condition.

7. The system for verifying a braking release condition according to any one of claims 4 to 6, wherein said predetermined condition may be set differently for each braking control module (202).

8. The system for verifying a braking release condition according to any one of claims 4 to 7, wherein said control means (204) is arranged to deactivate said at least one signaling means (210) or prevent actuation of the at least one signaling means (210) when said control means determines that the at least one braking means (201) associated with a braking control module is in a predetermined braking condition and said predetermined braking condition is the applied braking condition.

9. The system for verifying a braking release condition according to any one of the preceding claims, wherein said first communication means (206) and said second communication means (208) are arranged to update the messages transmitted from the braking control modules to the control means at communication instants defined in accordance with a predetermined communication period.

10. The system for verifying a braking release condition according to claim 9, wherein the messages transmitted at one communication instant are continuously transmitted through the first communication means and the second communication means until a subsequent communication instant.

11. The system for verifying a braking release condition according to any one of the preceding claims, wherein said first communication means (206) and/or said second communication means (208) is/are based on "black channel" protocol.

12. The system for verifying a braking release condition according to any one of the preceding claims, wherein said control means (204) is realized according to a safety integrity level, SIL, greater than a predetermined minimum safety integrity level.

13. The system for verifying a braking release condition according to any one of the preceding claims, wherein said vehicle (V) includes at least one railway vehicle;

said railway vehicle including a train control management system (TCMS);
wherein said control means (204) is distinct from said train control management system (TCMS); or
wherein said control means (204) is included in said train control management system (TCMS).

14. The system for verifying a braking release condition according to any one of the preceding claims, wherein said at least one signaling means (210) includes at least one visual signaling means.

15. A vehicle including:

- a system (200) for verifying a braking release condition by a plurality of braking means of at least one vehicle according to any one of the preceding claims.

16. The vehicle according to claim 15, wherein said vehicle is a railway vehicle or a railway convoy comprising a plurality of railway vehicles.

**Patentansprüche**

1. System (200) zur Überprüfung eines Bremslösungszustands einer Mehrzahl von Bremsmitteln (201) von mindestens einem Fahrzeug (V), insbesondere mindestens einem Schienenfahrzeug, umfassend:

- eine Mehrzahl von Bremssteuermodulen (202);
- ein Steuermittel (204);
- ein erstes Kommunikationsmittel, das eingerichtet ist, die Sendung von Nachrichten von jedem Bremssteuermodul der Mehrzahl von Bremssteuermodulen (202) zu dem Steuermittel zu ermöglichen;
**gekennzeichnet durch**
- ein zweites Kommunikationsmittel, das von dem ersten Kommunikationsmittel verschieden ist und eingerichtet ist, die Sendung von Nachrichten von jedem Bremssteuermodul der Mehrzahl von Bremssteuermodulen (202) zu dem Steuermittel zu ermöglichen;

wobei jedes Bremssteuermodul der Mehrzahl von Bremssteuermodulen (202) eingerichtet ist, um:

- mit mindestens einem der Bremsmittel (201) zugeordnet zu sein;
- zu bestimmen, ob das mindestens zugeordnete Bremsmittel (201) sich in einem gelösten Bremszustand befindet;
- wenn sich das mindestens zugeordnete Bremsmittel (201) in einem gelösten Bremszustand befindet, über das erste Kommunikationsmittel und das zweite Kommunikationsmittel an das Steuermittel (204) eine Nachricht über eine erfolgreiche Bremslösung zu senden;

wobei das Steuermittel (204) eingerichtet ist, um:

- wenn das Steuermittel (204) bestimmt, dass es von allen Bremssteuermodulen (202) die jeweiligen Nachrichten über eine erfolgreiche Bremslösung über mindestens eines des ersten Kommunikationsmittels (206) und des zweiten Kommunikationsmittels (208) empfängt, mindestens ein Signalisierungsmittel (210) zu betätigen.

2. System (200) zur Überprüfung eines Bremslösungszustands einer Mehrzahl von Bremsmitteln (201) von mindestens einem Fahrzeug (V), insbesondere mindestens einem Schienenfahrzeug, umfassend:

- eine Mehrzahl von Bremssteuermodulen (202);
- ein Steuermittel (204);
- ein erstes Kommunikationsmittel, das eingerichtet ist, die Sendung von Nachrichten von jedem Bremssteuermodul der Mehrzahl von Bremssteuermodulen (202) zu dem Steuermittel zu ermöglichen; **gekennzeichnet durch**
- ein zweites Kommunikationsmittel, das von dem ersten Kommunikationsmittel verschieden ist und eingerichtet ist, die Sendung von Nachrichten von jedem Bremssteuermodul der Mehrzahl von Bremssteuermodulen (202) zu dem Steuermittel zu ermöglichen;

wobei jedes Bremssteuermodul der Mehrzahl von Bremssteuermodulen (202) eingerichtet ist, um:

- mit mindestens einem der Bremsmittel (201) zugeordnet zu sein;
- einen Bremskraftwert, der von dem mindestens einen zugeordneten Bremsmittel (201) ausgeübt wird, zu messen;
- über das erste Kommunikationsmittel und das zweite Kommunikationsmittel an das Steuermittel (204) eine Nachricht über die ausgeübte Bremskraft zu senden, die den gemessenen ausgeübten Bremskraftwert anzeigt;

wobei das Steuermittel (204) eingerichtet ist, um:

- wenn das Steuermittel (204) bestimmt, dass alle Bremssteuermodule über mindestens eines des ersten Kommunikationsmittels (206) und des zweiten Kommunikationsmittels (208) die jeweiligen Nachrichten über die ausgeübte Bremskraft senden und alle jeweiligen Nachrichten über die ausgeübte Bremskraft einen ausgeübten Bremskraftwert anzeigen, der einem gelösten Bremszustand entspricht, mindestens ein Signalisierungsmittel (210) zu betätigen.

3. System zur Überprüfung eines Bremslösungszustands nach Anspruch 1 oder 2, wobei jedes Bremssteuermodul (202) ferner eingerichtet ist, um:

- über das erste Kommunikationsmittel und das zweite Kommunikationsmittel eine jeweilige Lebensnachricht an das Steuermittel (204) zu senden;

wobei das Steuermittel (204) eingerichtet ist, zu bestimmen, dass ein Bremssteuermodul der Mehrzahl von Bremssteuermodulen (202) nicht korrekt arbeitet oder nicht mehr mit dem ersten Kommunikationsmittel (206) und dem zweiten Kommunikationsmittel (208) verbunden ist, wenn:

- das Steuermittel (204) über das erste Kommunikationsmittel (206) und das zweite Kommunikationsmittel (208) die Lebensnachricht von dem Bremssteuermodul (202) für mindestens ein vorbestimmtes Zeitintervall nicht empfängt; oder
- das Steuermittel (204) von dem Bremssteuermodul (202) über das erste Kommunikationsmittel (206) und das zweite Kommunikationsmittel (208) eine Lebensnachricht empfängt, die von einer erwarteten Lebensnachricht verschieden ist.

4. System zur Überprüfung eines Bremslösungszustands nach einem der vorhergehenden Ansprüche, wobei, wenn das Steuermittel (204) bestimmt, dass ein Bremssteuermodul der Mehrzahl von Bremssteuermodulen (202) nicht korrekt arbeitet oder nicht mehr mit dem ersten Kommunikationsmittel (206) und dem zweiten Kommunikationsmittel (208) verbunden ist, das Steuermittel (204) eingerichtet ist, um:

- zu bestimmen, dass sich die Bremsmittel (201), die dem betreffenden Bremssteuermodul zugeordnet sind, in einem vorbestimmten Bremszustand befinden.

5. System zur Überprüfung eines Bremslösungszustands nach Anspruch 4, wobei der vorbestimmte Zustand ein gelöster Bremszustand ist.

6. System zur Überprüfung eines Bremslösungszustands nach Anspruch 4, wobei der vorbestimmte Zustand ein ausgeübter Bremszustand ist.

7. System zur Überprüfung eines Bremslösungszustands nach einem der Ansprüche 4 bis 6, wobei der vorbestimmte Zustand für jedes Bremssteuermodul (202) unterschiedlich eingestellt werden kann.

8. System zur Überprüfung eines Bremslösungszustands nach einem der Ansprüche 4 bis 7, wobei das Steuermittel (204) eingerichtet ist, das mindestens eine Signalisierungsmittel (210) zu deaktivieren oder die Betätigung des mindestens einen Signalisierungsmittels (210) zu verhindern, wenn das Steuermittel bestimmt, dass sich das mindestens ein Bremsmittel (201), das einem Bremssteuermodul zugeordnet ist, in einem vorbestimmten Bremszustand befindet und der vorbestimmte Bremszustand der ausgeübte Bremszustand ist.

9. System zur Überprüfung eines Bremslösungszustands nach einem der vorhergehenden Ansprüche, wobei das erste Kommunikationsmittel (206) und das zweite Kommunikationsmittel (208) eingerichtet sind, die Nachrichten, die von den Bremssteuerungsmodulen an das Steuermittel gesendet werden, zu Kommunikationszeitpunkten zu aktualisieren, die nach einer vorbestimmten Kommunikationsperiode definiert werden.

10. System zur Überprüfung eines Bremslösungszustands nach Anspruch 9, wobei die Nachrichten, die zu einem Kommunikationszeitpunkt gesendet werden, kontinuierlich über das erste Kommunikationsmittel und das zweite Kommunikationsmittel bis ein nachfolgender Kommunikationszeitpunkt gesendet werden.

11. System zur Überprüfung eines Bremslösungszustands nach einem der vorhergehenden Ansprüche, wobei das erste Kommunikationsmittel (206) und/oder das zweite Kommunikationsmittel (208) auf einem "Schwarzkanal"-Protokoll basiert/basieren.

12. System zur Überprüfung eines Bremslösungszustands nach einem der vorhergehenden Ansprüche, wobei das Steuermittel (204) nach einem Sicherheitsintegritätsniveau, SIL, erstellt wird, das größer als ein vorbestimmtes minimales Sicherheitsintegritätsniveau ist.

13. System zur Überprüfung eines Bremslösungszustands nach einem der vorhergehenden Ansprüche, wobei das Fahrzeug (V) mindestens ein Schienenfahrzeug umfasst;

wobei das Schienenfahrzeug ein Zugsteuerungs- und -Leitsystem (TCMS) umfasst;
wobei das Steuermittel (204) von dem Zugsteuerungs- und -Leitsystem (TCMS) verschieden ist; oder
wobei das Steuermittel (204) in das Zugsteuerungs- und -Leitsystem (TCMS) integriert ist.

14. System zur Überprüfung eines Bremslösungszustands nach einem der vorhergehenden Ansprüche, wobei das mindestens eine Signalisierungsmittel (210) mindestens ein visuelles Signalisierungsmittel umfasst.

15. Fahrzeug, umfassend:

- ein System (200) zur Überprüfung eines Bremslösungszustands durch eine Mehrzahl von Bremsmitteln von mindestens einem Fahrzeug nach einem der vorhergehenden Ansprüche.

16. Fahrzeug nach Anspruch 15, wobei das Fahrzeug ein Schienenfahrzeug oder ein Schienenfahrzeugkolonne ist, der eine Mehrzahl von Schienenfahrzeugen umfasst.

**Revendications**

1. Un système (200) de vérification d'une condition de desserrage de freinage d'une pluralité de moyens de freinage (201) d'au moins un véhicule (V), en particulier d'au moins un véhicule ferroviaire, comprenant :

- une pluralité de modules de commande de freinage (202) ;
- un moyen de commande (204) ;
- un premier moyen de communication agencé pour permettre la transmission de messages de chaque module de commande de freinage de ladite pluralité de modules de commande de freinage (202) vers ledit moyen de commande ;
**caractérisé par**
- un second moyen de communication, distinct du premier moyen de communication, agencé pour permettre la transmission de messages de chaque module de commande de freinage de ladite pluralité de modules de commande de freinage (202) vers ledit moyen de commande ;

dans lequel chaque module de commande de freinage de ladite pluralité de modules de commande de freinage (202) est agencé pour :

- être associé à au moins l'un desdits moyens de freinage (201) ;
- déterminer si le ou les moyens de freinage (201) auxquels il est associé se trouvent dans une condition de freinage desserré ;
- lorsque le ou les moyens de freinage (201) auxquels il est associé se trouvent dans une condition de freinage desserré, transmettre audit moyen de commande (204), via ledit premier moyen de communication et ledit second moyen de communication, un message de desserrage de freinage réussi ;

dans lequel ledit moyen de commande (204) est agencé pour :

- lorsque le moyen de commande (204) détermine qu'il reçoit, de la part de tous les modules de commande de freinage (202), les messages respectifs de desserrage de freinage réussi par l'intermédiaire d'au moins l'un du premier moyen de communication (206) et du second moyen de communication (208), actionner au moins un moyen de signalisation (210).

2. Un système (200) de vérification d'une condition de desserrage de freinage d'une pluralité de moyens de freinage (201) d'au moins un véhicule (V), en particulier d'au moins un véhicule ferroviaire, comprenant :

- une pluralité de modules de commande de freinage (202) ;
- un moyen de commande (204) ;
- un premier moyen de communication agencé pour permettre la transmission de messages de chaque module de commande de freinage de ladite pluralité de modules de commande de freinage (202) vers ledit moyen de commande ;
**caractérisé par**
- un second moyen de communication, distinct du premier moyen de communication, agencé pour permettre la transmission de messages de chaque module de commande de freinage de ladite pluralité de modules de commande de freinage (202) vers ledit moyen de commande ;

dans lequel chaque module de commande de freinage de ladite pluralité de modules de commande de freinage (202) est agencé pour :

- être associé à au moins l'un desdits moyens de freinage (201) ;
- mesurer une valeur de force de freinage appliquée par le ou les moyens de freinage (201) auxquels il est associé ;
- transmettre audit moyen de commande (204), via ledit premier moyen de communication et ledit second moyen de communication, un message de force de freinage appliquée indiquant la valeur mesurée de force de freinage appliquée ;

dans lequel ledit moyen de commande (204) est agencé pour :

- lorsque le moyen de commande (204) détermine que tous les modules de commande de freinage, par l'intermédiaire d'au moins l'un du premier moyen de communication (206) et du second moyen de communication (208), transmettent les messages respectifs de force de freinage appliquée et que tous lesdits messages respectifs de force de freinage appliquée indiquent une valeur de force de freinage appliquée correspondant à une condition de freinage desserré, actionner au moins un moyen de signalisation (210).

3. Le système de vérification d'une condition de desserrage de freinage selon la revendication 1 ou 2, dans lequel chaque module de commande de freinage (202) est en outre agencé pour :

- via ledit premier moyen de communication et ledit second moyen de communication, transmettre un message de vie respectif au moyen de commande (204) ;

dans lequel ledit moyen de commande (204) est agencé pour déterminer qu'un module de commande de freinage de ladite pluralité de modules de commande de freinage (202) ne fonctionne pas correctement ou n'est plus connecté au premier moyen de communication (206) et au second moyen de communication (208) lorsque :

- ledit moyen de commande (204) ne reçoit pas, par l'intermédiaire dudit premier moyen de communication (206) et dudit second moyen de communication (208), le message de vie provenant dudit module de commande de freinage (202) pendant au moins un intervalle de temps prédéterminé ; ou
- ledit moyen de commande (204) reçoit, de la part dudit module de commande de freinage (202), par l'intermédiaire dudit premier moyen de communication (206) et dudit second moyen de communication (208), un message de vie différent d'un message de vie attendu.

4. Le système de vérification d'une condition de desserrage de freinage selon l'une quelconque des revendications précédentes, dans lequel, lorsque ledit moyen de commande (204) détermine qu'un module de commande de freinage de ladite pluralité de modules de commande de freinage (202) ne fonctionne pas correctement ou n'est plus connecté au premier moyen de communication (206) et au second moyen de communication (208), ledit moyen de commande (204) est agencé pour :

- déterminer que le ou les moyens de freinage (201) associés audit module de commande de freinage se trouvent dans une condition de freinage prédéterminée.

5. Le système de vérification d'une condition de desserrage de freinage selon la revendication 4, dans lequel ladite condition prédéterminée est une condition de freinage desserré.

6. Le système de vérification d'une condition de desserrage de freinage selon la revendication 4, dans lequel ladite condition prédéterminée est une condition de freinage appliqué.

7. Le système de vérification d'une condition de desserrage de freinage selon l'une quelconque des revendications 4 à 6, dans lequel ladite condition prédéterminée peut être réglée différemment pour chaque module de commande de freinage (202).

8. Le système de vérification d'une condition de desserrage de freinage selon l'une quelconque des revendications 4 à 7, dans lequel ledit moyen de commande (204) est agencé pour désactiver ledit au moins un moyen de signalisation (210) ou empêcher l'actionnement dudit au moins un moyen de signalisation (210) lorsque ledit moyen de commande détermine que le ou les moyens de freinage (201) associés à un module de commande de freinage se trouvent dans une condition de freinage prédéterminée et que ladite condition de freinage prédéterminée est la condition de freinage appliqué.

9. Le système de vérification d'une condition de desserrage de freinage selon l'une quelconque des revendications précédentes, dans lequel ledit premier moyen de communication (206) et ledit second moyen de communication (208) sont agencés pour mettre à jour les messages transmis des modules de commande de freinage vers le moyen de commande à des instants de communication définis conformément à une période de communication prédéterminée.

10. Le système de vérification d'une condition de desserrage de freinage selon la revendication 9, dans lequel les messages transmis à un instant de communication sont transmis de manière continue par l'intermédiaire du premier moyen de communication et du second moyen de communication jusqu'à un instant de communication ultérieur.

11. Le système de vérification d'une condition de desserrage de freinage selon l'une quelconque des revendications précédentes, dans lequel ledit premier moyen de communication (206) et/ou ledit second moyen de communication (208) est/sont basé(s) sur un protocole « black channel ».

12. Le système de vérification d'une condition de desserrage de freinage selon l'une quelconque des revendications précédentes, dans lequel ledit moyen de commande (204) est réalisé selon un niveau d'intégrité de sécurité, SIL, supérieur à un niveau minimal d'intégrité de sécurité prédéterminé.

13. Le système de vérification d'une condition de desserrage de freinage selon l'une quelconque des revendications précédentes, dans lequel ledit véhicule (V) comprend au moins un véhicule ferroviaire ;

ledit véhicule ferroviaire comprenant un système de gestion et de commande de train (TCMS) ;
dans lequel ledit moyen de commande (204) est distinct dudit système de gestion et de commande de train (TCMS) ; ou

dans lequel ledit moyen de commande (204) est inclus dans ledit système de gestion et de commande de train (TCMS).

14. Le système de vérification d'une condition de desserrage de freinage selon l'une quelconque des revendications précédentes, dans lequel ledit au moins un moyen de signalisation (210) comprend au moins un moyen de signalisation visuel.

15. Un véhicule comprenant :

   - un système (200) de vérification d'une condition de desserrage de freinage par une pluralité de moyens de freinage d'au moins un véhicule selon l'une quelconque des revendications précédentes.

16. Le véhicule selon la revendication 15, dans lequel ledit véhicule est un véhicule ferroviaire ou un convoi ferroviaire comprenant une pluralité de véhicules ferroviaires.

**FIG.1**
(PRIOR ART)

EP 4 526 165 B1

**FIG.2**

EP 4 526 165 B1

**FIG.3**

**EP 4 526 165 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6401015 B1